Europäisches Patentamt

European Patent Office

Office européen des brevets

(19)

(11) Veröffentlichungsnummer: **0 353 347 B1**

(12) **EUROPÄISCHE PATENTSCHRIFT**

(45) Veröffentlichungstag der Patentschrift: **23.01.91**

(51) Int. Cl.⁵: **F 16 F 1/38,** F 16 C 11/00

(21) Anmeldenummer: **88119188.6**

(22) Anmeldetag: **18.11.88**

(54) Gelenklager, insbesondere für einen Achslenker eines Kraftfahrzeugs.

(30) Priorität: **16.07.88 DE 3824272**

(43) Veröffentlichungstag der Anmeldung:
**07.02.90 Patentblatt 90/06**

(45) Bekanntmachung des Hinweises auf die
Patenterteilung:
**23.01.91 Patentblatt 91/04**

(84) Benannte Vertragsstaaten:
**AT BE CH DE ES FR GB IT LI NL SE**

(56) Entgegenhaltungen:
EP-A-0 020 790
EP-A-0 199 240
WO-A-82/03361
AT-B- 317 697
AT-B- 343 492
DE-A-2 337 872

(73) Patentinhaber: **Jörn GmbH**
**Porschestrasse 10**
**D-7012 Fellbach (DE)**

(72) Erfinder: **Zawadzki, Bernd**
**Talstrasse 14**
**DE-7054 Korb (DE)**

(74) Vertreter: **Neubauer, Hans-Jürgen, Dipl.-Phys.**
**Fauststrasse 30**
**D-8070 Ingolstadt (DE)**

EP 0 353 347 B1

Courier Press, Leamington Spa, England.

## Beschreibung

Die Erfindung betrifft ein Gelenklager, insbesondere für einen Achslenker eines Kraftfahrzeugs, nach dem Oberbegriff des Anspruchs 1.

Ein allgemein bekanntes und üblicherweise verwendetes Gelenklager zur Verbindung eines Achslenkers mit dem Kraftfahrzeugaufbau besteht aus einem länglichen, inneren Lagerteil, das mit dem Fahrzeugaufbau verschraubt ist. Dieses Lagerteil hat in einem mittleren Bereich eine ballige, kugelförmige Verdickung mit einem bestimmten Radius.

Auf dieser so gebildeten Kugelfläche liegen Kunststoffgleitelemente mit entsprechend geformten Gleitflächen, die in einem Metallgehäuse gehalten sind. Das Metallgehäuse umfaßt somit mit den eingelagerten Kunststoffgleitelementen die Kugelform, wodurch sich eine kugelgelenkartige Ausbildung ergibt und das Metallgehäuse in bestimmten Grenzen in allen Raumrichtungen gegenüber dem inneren Lagerteil verschwenkbar ist. Mit dem Metallgehäuse ist der Achslenker verbunden.

Zwangsläufig ergeben sich bei einer solchen Ausführung Spalte zwischen dem ersten Lagerteil und den Stirnseiten des Metallgehäuses sowie frei liegende Kugel-Gleitflächen zu den Seiten des langgestreckten Metallteils hin. Diese Stellen werden dadurch geschützt, daß zu beiden Stirnseiten ein ringförmiger Balg angebracht ist, der mit dem äußeren Rand mit dem Metallgehäuse und mit dem inneren Rand mit dem inneren Metallteil durch Federringe verbunden ist. Somit sind diese empfindlichen Stellen gegen Schmutz und Witterungseinflüsse abgedeckt und geschützt. Bei einer Relativbewegung zwischen dem Metallgehäuse und dem inneren Metallteil verformt sich der Balg entsprechend.

Die Ausführungsform nach dem Stand der Technik ist aufwendig in der Herstellung und entsprechend teuer. Insbesondere ist es notwendig, genau bearbeitete Kugel-Gleitflächen herzustellen. Ein weiterer Nachteil besteht darin, daß die verwendeten Kunststoff-Gleitelemente praktisch keine elastischen Eigenschaften haben. Einerseits werden dadurch die Kräfte zwischen den Lagerteilen, insbesondere auch auf die Kunststoff-Gleitelemente, ohne Dämpfung mit allen Kraftspitzen direkt übertragen, was die Lebensdauer ungünstig beeinflussen kann. Andererseits werden auch nur sehr kleine Relativbewegungen jedesmal sofort in reibende Gleitbewegungen zwischen den Bauteilen umgesetzt, da praktisch keine Relativbewegung in einem Bauteil molekular aufgenommen wird. Zudem ist die Anbindung dadurch sehr starr, was sich ungünstig auf die Fahrzeugakustik, die Geräuschbildung und Geräuschübertragung, auswirkt.

Der abdichtende Balg steht weit ausgewölbt an den Stirnseiten des Lagers vor und wird daher regelmäßig leicht beschädigt, wodurch reibende partikel in das Lager eindringen können und dann das Lager schnell zerstören. Die Abdichtbälge werden lediglich mit Federringen gehalten und es hat sich gezeigt, daß dies für eine notwendig gute Dichtung nicht ausreichend ist. Beispielsweise können bei der Verwendung üblicher Hochdruck-Reinigungsgeräte durch den scharfen Wasserstrahl Schmutzpartikel und Wasser unter dem Klemmring hindurch in das Lagerinnere gedrängt werden, wodurch dann das Lager schnell unbrauchbar wird. Die Gummischicht des Balges kann durch auftretende Falten und Knicke auch betriebsmäßig stark belastet sein.

Es ist weiter eine zylindrische Gelenkbuchse für ein Gelenklager bekannt (DE-PS 23 37 872), die aus einem Innenrohr oder Lagerbolzen und aus einem Außenrohr mit einer dazwischen festhaftend einvulkanisierten Gummischicht besteht. Das Außenrohr hat einen Längsschlitz, der sich mit seiner Schlitztiefe weit in die Gummischicht hinein erstreckt. Die Gelenkbuchse wird unter radialer Vorspannung in ein Aufnahmeauge eingebracht, wobei die Gelenkbuchse mit ihrem im unbelasteten Zustand größeren Durchmesser und gleichmäßiger Verringerung dieses Durchmessers in das Aufnahmeauge mit einem kleineren Durchmesser eingepreßt worden ist. Dabei hat sich der Längsschlitz geschlossen, so daß im eingepreßten Zustand am Schlitz sowohl das Außenrohr, die Gummischicht und evtl. Zwischenbleche aneinanderliegen und spannungsmäßig praktisch durchlaufend sind. Durch die Vorspannung im Gummi wird eine feste Verbindung zwischen dem Aufnahmeauge und dem Außenrohr der Gelenkbuchse hergestellt.

Das Aufnahmeauge bildet hier das eine zu lagernde Teil und das Innenrohr das andere zu lagernde Teil. Alle Relativbewegungen zwischen diesen beiden Teilen werden somit molekular im Gummi aufgenommen. Gleitbewegungen erfolgen hier nicht. Dies hat andererseits zur Folge, daß nur relativ geringe kardanische Bewegungen und insbesondere Schwenkbewegungen um die Längsachse der Gelenkbuchse aufgenommen werden können, was für den Einsatz zur Lagerung eines Achslenkers an einem Kraftfahrzeug nicht ausreichend sein kann.

Da mit der Gelenkbuchse nach dem Stand der Technik alle Relativbewegungen ohne gleitende Bewegungen im Gummi molekular aufgenommen werden, ist es hier auch nicht notwendig, Maßnahmen für eine stirnseitige Abdichtung vorzusehen.

Mit der Gelenkbuchse nach dem Stand der Technik werden mit zunehmenden Auslenkungen bzw. Relativbewegungen große Rückstellkräfte erzeugt, die beispielsweise das Lenkverhalten eines Achslenkers ungünstig beeinflussen können und daher unerwünscht sind.

Ausgehend von dem zuletzt beschriebenen Stand der Technik eines Gelenklagers mit der beschriebenen Gelenkbuchse wird die Aufgabe der Erfindung darin gesehen, ein gattungsgemäßes Gelenklager so weiterzubilden, daß Auslenkungen um die Lagerachse mit nur geringen Rückstellkräften möglich sind und das Lager eine hohe Dauerhaltbarkeit aufweist.

Diese Aufgabe wird mit den kennzeichnenden Merkmalen des Anspruchs 1 gelöst.

Gemäß Anspruch 1 wird das Innenrohr der Gelenkbuchse mit seiner Innenfläche gleitbar auf einen mittleren, zylindrischen Lagerbolzen aufgesteckt, wobei dieser Lagerbolzen das zweite zu lagernde Teil bildet. Im Falle eines Gelenklagers für einen Achslenker eines Kraftfahrzeugs ist die Lenkerstange mit dem Aufnahmeauge verbunden und der zylindrische Lagerbolzen beidseitig mit dem Fahrzeugaufbau verschraubt.

Mit der erfindungsgemäßen Ausführung wird erreicht, daß die, beispielsweise bei einer Achslenkerlagerung, großen Schwenkbewegungen in der Einfederrichtung durch eine gleitende Drehung des Innenrohrs um die Lagerachse aufgenommen werden. Kleine Schwenkbewegungen in dieser Richtung werden zuerst in der Gummischicht aufgenommen und erst ab einem bestimmten Drehmoment entsprechend einer größeren Einfederung wird das Innenrohr am Lagerbolzen verdreht. Die Größe des Drehmoments hängt ab von der Reibungskraft zwischen Innenrohr und Lagerbolzen. Jedenfalls ist festzustellen, daß nicht jede geringe Einfederung zu einer reibenden und gleitenden Bewegung führt und somit die Belastung der Gleitflächen reduziert und die Lebensdauer des Lagers erhöht wird. Kardanische Bewegungen in den anderen Raumrichtungen sind insbesondere bei der Lagerung von Achslenkern wesentlich kleiner, so daß diese ohne Schwierigkeiten von der Gummischicht aufgenommen werden können.

Die Gummischicht verbessert das akustische Verhalten hinsichtlich der Geräuscherzeugung und der Geräuschübertragung und verringert auftretende Kraft- und Spannungsspitzen im Lager.

Wegen der gleitenden Verbindung zwischen dem Lagerbolzen und dem Innenrohr ist es einerseits erforderlich, die Anordnung gegen eine Verschiebung in Axialrichtung zu sichern und andererseits die Stirnwände bzw. die Reibflächen gegen Umwelteinflüsse abzudichten. Beides wird gemäß Anspruch 1 dadurch erreicht, daß an beiden Stirnseiten des Lagerbolzens jeweils erste Lagerringe koaxial angebracht und mit dem Lagerbolzen fest und dicht verbunden sind, wobei die Lagerringe an den Stirnseiten des Innenrohrs der Gelenkbuchse anliegen und das Innenrohr in Axialrichtung festlegen und halten. Die Stirnseiten des Innenrohrs gleiten somit ebenfalls an den Lagerringen. Zudem sind an beiden Seiten des Aufnahmeauges jeweils zweite Lagerringe angebracht, die mit dem Aufnahmeauge fest und dicht verbunden sind. Für eine Abdichtung des Innenbereichs des Lagers bzw. der gesamten Gelenkbuchse ist zwischen jeweils zwei zusammengehörigen Lagerringen eine Gummiwand dicht einvulkanisiert. Die Gummiwand liegt bevorzugt in einer Radialebene. Aus Gewichtsgründen oder wegen einer Gestaltung des Einbauraums kann das Außenrohr auch kürzer als das Innenrohr gewählt werden, wodurch sich im Längsschnitt eine konische Lage der Gummiwände auf die Lagermitte zu ergibt.

Somit wird auf einfache Weise eine Festlegung der Lagerteile in Axialrichtung zueinander und eine zuverlässige Abdichtung des Lagers an den Stirnseiten erhalten.

Besonders vorteilhaft wird nach Anspruch 2 das Innenrohr der Gelenkbuchse aus Kunststoff mit geeigneten Gleiteigenschaften hergestellt, wobei sich bei der Wahl einer entsprechenden Kunststoffart die Gummischicht auf das Kunststoffinnenrohr anvulkanisieren läßt. Auch das Außenrohr könnte aus Kunststoff sein, kann jedoch in an sich bekannter Weise auch aus Metall hergestellt sein.

Der Durchmesser und die Materialstärke des Kunststoffinnenrohrs werden zweckmäßig nach Anspruch 3 so gewählt, daß das Innenrohr unter elastischer Verformung des Kunststoffmaterials durch den radialen Vorspannungsdruck in der Gummischicht, d.h. von den Stirnseiten her zur Mitte hin zunehmend, auf den zylindrischen Lagerbolzen aufgepreßt ist. Dadurch ergibt sich ein guter Halt ohne Spiel in der Verbindung, wobei Fertigungstoleranzen im Kunststoffmaterial ausgeglichen werden. Es wird auch eine gewisse Schwergängigkeit bei der Drehbewegung erreicht, so daß kleine Auslenkungen ohne gleitende Drehbewegung in der Gummischicht molekular aufgenommen werden.

Grundsätzlich können am Außenrohr und in der Gummischicht mehrere Längsschlitze vorgesehen sein, so daß das Außenrohr entsprechend unterbrochen ist und bei zwei Längsschitzen, beispielsweise aus zwei Halbschalen, besteht. Eine besonders einfache und preiswerte Ausführungsform ergibt sich nach Anspruch 4 dann, wenn nur ein Längsschlitz vorgesehen ist und das Außenrohr als gerolltes Blechteil hergestellt wird.

Zur Verhinderung der Querdehnung des Gummis in der Gummischicht und für gute Führungseigenschaften des Gelenklagers ist es nach Anspruch 5 vorteilhaft, an sich bekannte Zwischenbleche mit einzuvulkanisieren, so daß mehrere, durch die Zwischenbleche getrennte, Gummischichten entstehen. Es hat sich gezeigt, daß für übliche Anwendungsfälle das Einbringen eines Zwischenblechs ausreicht.

Aus Gründen der Funktion und der Herstellung ist es nach Anspruch 6 zweckmäßig, den Längsschlitz V-förmig auszuführen, wobei die Spitze der V-Form bis etwa an die Außenfläche des Innenrohrs reicht. Grundsätzlich sind auch andere, ähnliche Formen möglich, wobei es wesentlich ist, daß der Schlitz nach dem Einpressen der Gelenkbuchse geschlossen ist und die Gummi- und Metallschichten mit gleichmäßigem Spannungsverlauf dann praktisch durchgehend ausgeführt sind.

In an sich bekannter Weise kann das Außenrohr nach Anspruch 7 an seiner Außenfläche mit einem Gummifilm zur Erhöhung der Haftreibung versehen sein.

In einer Ausführungsform nach Anspruch 8 entspricht die axiale Länge des Aufnahmeauges etwa der axialen Länge der Gelenkbuchse. Dabei ist es erforderlich, daß die zweiten Lagerringe so breit gewählt werden, daß sie stirnseitig mit einem Überstand am Aufnahmeauge vorsehen, so daß dieser Überstand gegenüber den ersten Lagerringen liegt und dort die Gummiwand anvulkanisiert ist. Die zweiten Lagerringe werden dazu so in Axialrichtung auf das Aufnahmeauge aufgepreßt, daß sie den jeweiligen Stirnseitenbereich umfassen.

In einer Ausführungsform nach Anspruch 9 ist die axiale Länge des Aufnahmeauges größer als die der Gelenkbuchse, so daß Stirnseitenbereiche des Aufnahmeauges bereits radial gegenüber den ersten Lagerringen liegen. Die zweiten Lagerringe sind dabei zweckmäßig so am Aufnahmeauge aufgepreßt, daß sie an den Stirnbereichen von innen her anliegen und zwischen den ersten und zweiten Lagerringen wiederum die Gummiwand einvulkanisiert ist.

In einer besonders bevorzugten Ausführungsform nach Anspruch 10 ist der erste und zweite Lagerring mit der dazwischen einvulkanisierten Gummiwand vor der Montage des Gelenklagers ein vorgefertigtes, zusammenhängendes Bauteil. Der Vulkanisiervorgang nur mit den beiden Lagerringen ist einfach, schnell und preiswert durchzuführen. In einer etwas weniger vorteilhaften Ausführung wäre es aber auch möglich, zumindest einseitig die Dichtvorrichtung, z.B. mit einem ringförmigen Anschlag am Lagerbolzen, anzubringen und erst dann die Gelenkbuchse auf den Lagerbolzen von der anderen Seite her aufzustecken.

Nach Anspruch 11 wird eine schnelle und einfache Montage erreicht, wenn die Lagerringe auf den Lagerbolzen bzw. auf das Lagerauge in Axialrichtung dicht aufgepreßt werden. Zweckmäßig werden an diesen Bauteilen Schultern oder Anschläge für den Aufpreßvorgang geschaffen.

Eine besonders rückstellkraftfreie Beweglichkeit der Gummiwand bei guter Dichtheit wird nach den Merkmalen des Anspruchs 12 damit erreicht, daß die Dicke der Gummiwand im mittleren Bereich zwischen den Lagerringen dünner und zu den Lagerringen hin dicker ist.

Bei der Verwendung des Gelenklagers zur Lagerung eines Achslenkers ist die Lenkerstange nach Anspruch 13 mit dem Aufnahmeauge verbunden.

Anhand zweier Ausführungsbeispiele wird die Erfindung mit weiteren Einzelheiten, Merkmalen und Vorteilen näher beschrieben.

Es zeigen

Fig. 1 einen Längsschnitt durch eine erste Ausführungsform eines fertig montiertes Gelenklagers,

Fig. 2 eine stirnseitige Ansicht einer Gelenkbuchse des Gelenklagers nach Fig. 1 vor dem Einbau und

Fig. 3 einen Längsschnitt durch eine zweite Ausführungsform eines fertig montierten Gelenklagers.

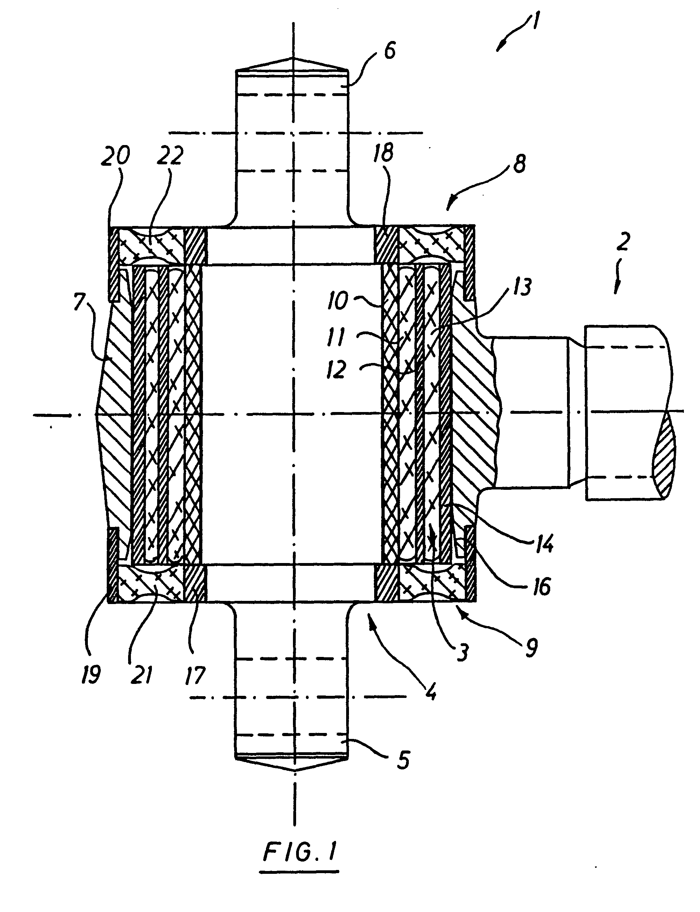

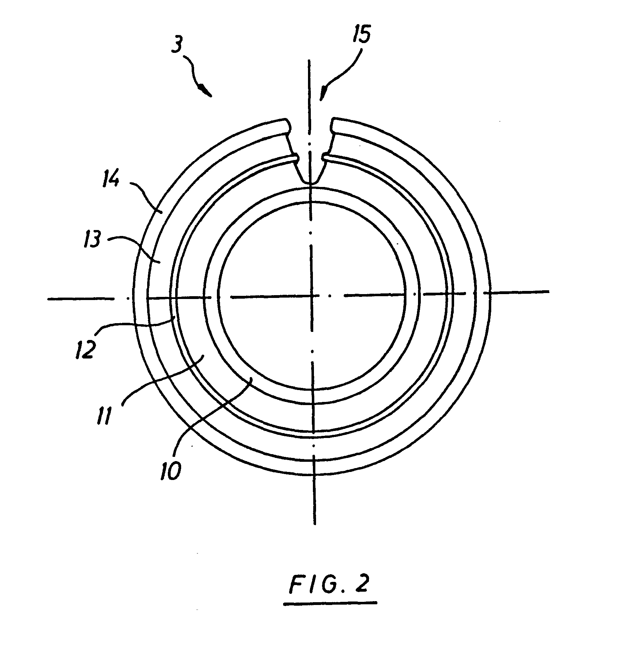

In Fig. 1 ist die erste Ausführungsform eines Gelenklagers 1 für einen Achslenker 2 eines Kraftfahrzeugs dargestellt. Das Gelenklager 1 besteht aus einer zylindrischen Gelenkbuchse 3, die im unbelasteten Zustand auch in Fig. 2 dargestellt ist.

Die Gelenkbuchse 3 umschließt einen zylindrischen Lagerbolzen 4, der mit seitlichen Schraubanschlüssen 5 und 6 zur Verbindung mit dem Fahrzeugaufbau versehen ist.

Die Gelenkbuchse 3 ist in ein Aufnahmeauge 7 eingepreßt, mit dem der Achslenker 2 Verbindung hat.

Die Stirnseiten des Gelenklagers sind durch je ein Dichtungsbauteil 8, 9 abgeschlossen.

Im einzelnen besteht die Gelenkbuchse 1 aus einem Innenrohr 10 aus Kunststoffmaterial, das mit seiner Innenfläche gleitbar auf dem Lagerbolzen 4 aufgesteckt ist. Dabei ist der Innendurchmesser des Innenrohrs 10 so bemessen, daß das Innenrohr 10 unter geringer Verformung des Kunststoffmaterials auf den zylindrischen Lagerbolzen 4 aufgepreßt ist.

An das Innenrohr 10 schließen sich nach außen hin eine erste Gummischicht 11, ein Zwischenblech 12, eine zweite Gummischicht 13 und ein metallisches Außenrohr 14 an.

Wenn die Gelenkbuchse 3 noch nicht in das Aufnahmeauge 7 eingepreßt ist, hat sie die in Fig. 2 dargestellte Form mit V-förmigem Längsschlitz 15, der sich bis an das Innenrohr 10 erstreckt. Die Schlitzbreite ist so gewählt, daß sich der Längsschlitz 15 beim Einpressen in das Aufnahmeauge 7 unter Verringerung des Durchmessers der Gelenkbuchse 3 schließt.

Die Gummischichten 11 und 13 sind im unbelasteten Zustand nicht bis ganz an die Stirnseiten der Rohre 10, 14 der Gelenkbuchse 3 geführt, so daß sie nach dem Einpressen der Gelenkbuchse 3 nicht über die Stirnseiten herausstehen (sh. Fig. 1).

Das Aufnahmeauge 7 ist ein metallisches Gehäuse mit einem zylindrischen Aufnahmeraum und einer Länge in Axialrichtung, die geringfügig kleiner als die Länge der Rohre 10, 14 der Gelenkbuchse 3 bzw. der zylindrischen Gleitfläche auf dem Lagerbolzen 4 ist. An den Stirnseiten des Aufnahmeauges 7 sind Einführschrägen 16 angebracht, um den Einpreßvorgang für die Gelenkbuche 3 zu vereinfachen. Während aber das Innenrohr 10 auf dem Lagerbolzen 4 unter Belastung gleitet, wird das Außenrohr 14 aufgrund der Vorspannung in den Gummischichten 11 und 13 von innen her an das Aufnahmeauge 7 so fest gepreßt, daß bei entsprechender Ausgestaltung der Anlageflächen hier eine feste Verbindung erfolgt, die keine Gleiteigenschaften hat; in einer anderen Betrachtungsweise dreht bei einem aufgebrachten Drehmoment das Kunststoffinnenrohr 10 eher durch als die Anlageverbindung zwischen dem Außenrohr 14 und dem Aufnahmeauge 7.

An beiden Stirnseiten des Lagerbolzens 4 sind die Dichtungsbauteile 8, 9 aufgesetzt, die aus jeweils einem ersten Lagerring 17, 18, einem zweiten Lagerring 19, 20 und je einer einvulkanisierten Gummiwand zwischen den Lagerringen bestehen. Die ersten Lagerringe 17, 18 sind stirnseitig auf den Lagerbolzen 4 aufgepreßt und stellen die Verbindung der Dichtungsbauteile 8, 9 zum Lagerbolzen 4 her. Zudem wird mit den ersten Lagerringen 17, 18 die Gelenkbuchse 3 bzw. deren Innenrohr 10 in Achsrichtung festgelegt und gehalten.

Auch die zweiten Lagerringe 19, 20 sind auf entsprechend geformte Ausnehmungen am Aufnahmeauge 7 zugleich mit den ersten Lagerringen 17, 18 aufgepreßt. Die Gummiwände 21, 22 haben in der Mitte zwischen den Lagerringen eine leichte Einschnürung.

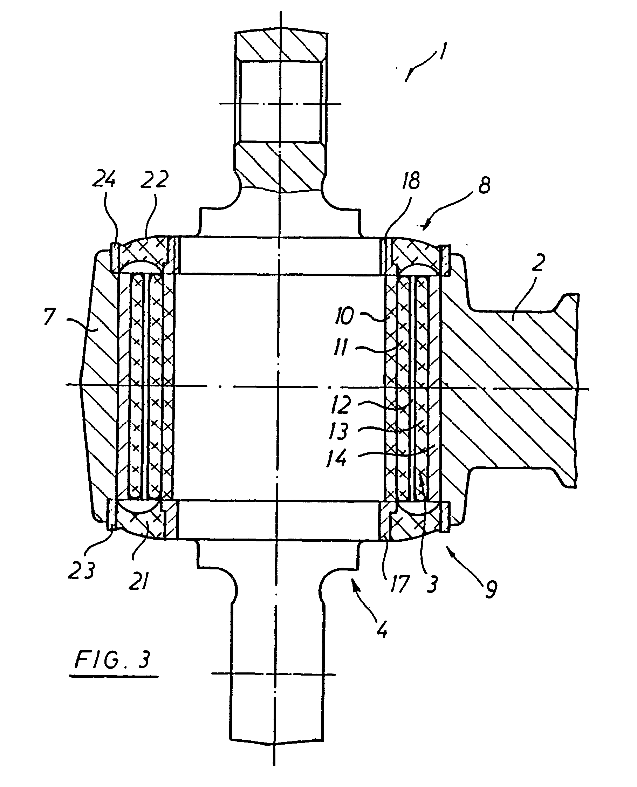

In der zweiten Ausführungsform nach Fig. 3 ist die axiale Länge des Aufnahmeauges 7 größer als die Länge der Gelenkbuchse 3, so daß die Stirnseitenbereiche des Aufnahmeauges 7 bereits radial gegenüber den ersten Lagerringen 17, 18 liegen. Es können daher in der axialen Länge gegenüber der ersten Ausführungsform nach Fig. 1 kürzere, zweite Lagerringe 23, 24 verwendet werden, die in Axialrichtung so aufgepreßt sind, daß sie an den Stirnseitenbereichen von innen her am Aufnahmeauge 7 anliegen. In dieser Ausführungsform sind die zweiten Lagerringe 23, 24 von den stabilen Stirnbereichen des Aufnahmeauges 7 abgedeckt und geschützt. Die anderen Teile der zweiten Ausführungsform nach Fig. 3 entsprechen im wesentlichen den Teilen der ersten Ausführungsform nach Fig. 2 und sind daher auch mit den gleichen Bezugszeichen versehen.

Die dargestellten beiden Ausführungsformen der Gelenklager 1 haben folgende Funktion:

Beim Aufbringen eines Drehmoments um die Längsachse des Gelenklagers 1 durch den Achslenker 2 beim Einfedern des Kraftfahrzeugs werden geringe Auslenkungen molekular in den Gummischichten 11, 13 aufgenommen. Bei größeren Auslenkungen wird das Kunststoffinnenrohr 10 gegenüber der Gleitfläche am Lagerbolzen 4 verdreht. Dadurch erfolgt eine weitgehend rückstellkraftfreie Verbindung zwischen dem Lagerbolzen 4 bzw. dem Fahrzeugaufbau und dem Achslenker 2. Kardanische Auslenkungen, die bei dem vorliegenden Anwendungsfall geringer sind, werden in den Gummischichten 11, 13 aufgenommen. Eine Querdehnung des Gummis wird durch das eingebrachte Zwischenblech 12 reduziert, so daß eine gute Längsführung erhalten wird.

Die Stirnbereiche zwischen dem Aufnahmeauge 7 und dem Lagerbolzen 4, d.h. der Innenbereich des Gelenklagers 1, werden durch die Dichtungsbauteile 8, 9 sicher vor Umwelteinflüssen geschützt. Relativbewegungen der Lagerteile werden in den Gummiwänden 21, 22 ohne Knicke und Faltenbildung aufgenommen. Die Stirnseiten sind dabei plan und glatt ohne vorstehende und leicht verletzbare Balgausbauchungen.

Zusammenfassend wird festgestellt, daß mit der Erfindung ein Gelenklager vorgeschlagen wird, das insbesondere vorteilhaft die Anforderungen für die Lagerung eines Achslenkers eines Kraftfahrzeugs erfüllt.

**Patentansprüche**

1. Gelenklager (1), insbesondere für einen Achslenker (2) eines Kraftfahrzeugs,
    mit einer zylindrischen Gelenkbuchse (3) bestehend aus einem Innenrohr (10) und einem Außenrohr (14) und wenigstens einer dazwischen festhaftend einvulkanisierten Gummischicht (11, 13), wobei das Außenrohr wenigstens einen Längsschlitz aufweist, der sich mit seiner Schlitztiefe weit in die Gummischicht hinein erstreckt und
    mit einem Aufnahmeauge (7) (erstes Lagerteil), in das die Gelenkbuchse (3) unter radialer Vorspannung eingebracht ist, wobei die Gelenkbuchse mit ihrem im unbelasteten Zustand größeren Durchmesser unter gleichmäßiger Verringerung dieses Durchmessers in das Aufnahmeauge (7) mit kleinerem Durchmesser eingepreßt ist und sich dabei der im unbelasteten Zustand der Gelenkbuchse mit einer entsprechenden Schlitzbreite ausgeführte Längsschlitz geschlossen hat, wodurch aufgrund der Vorspannung in der Gummischicht eine feste Verbindung zwischen dem Aufnahmeauge (7) und dem Außenrohr (14) der Gelenkbuchse hergestellt ist, dadurch gekennzeichnet,
    daß das Innenrohr (10) mit seiner Innenfläche gleitbar auf einen mittleren zylindrischen Lagerbolzen (4) (zweites Lagerteil) aufgesteckt ist,
    daß an beiden Stirnseiten des Lagerbolzens (4) jeweils erste Lagerringe (17, 18) koaxial angebracht und mit dem Lagerbolzen (4) fest und dicht verbunden sind, wobei die Lagerringe (17, 18) an den Stirnseiten des Innenrohrs (10) der Gelenkbuchse (3) anliegen und das Innenrohr (10) in Axialrichtung halten,
    daß an beiden Stirnseiten des Aufnahmeauges (7) jeweils zweite Lagerringe (19, 20; 23, 24) angebracht sind, die mit dem Aufnahmeauge (7) fest und dicht verbunden sind und die in Radialrichtung gegenüber den ersten Lagerringen (17, 18) liegen,
    daß je eine Gummiwand (21, 22) zwischen den jeweiligen Lagerringen (17, 19; 18, 20 bzw. 17, 23; 18, 24) dicht einvulkanisiert ist.

2. Gelenklager nach Anspruch 1, dadurch gekennzeichnet, daß das Innenrohr (10) der Gelenkbuchse (3) aus Kunststoff und das Außenrohr (14) aus Metall hergestellt ist.

3. Gelenklager nach Anspruch 2, dadurch gekennzeichnet, daß der Innendurchmesser und die Materialstärke des Innenrohrs (10) so gewählt sind, daß das Innenrohr (10) unter Verformung des Kunststoffmaterials auf den zylindrischen Lagerbolzen (4) aufgepreßt ist.

4. Gelenklager nach einem der Ansprüche 1 bis 3, dadurch gekennzeichnet, daß nur ein Längsschlitz (15) vorgesehen ist und das Außenrohr (14) als gerolltes Blechteil ausgebildet ist.

5. Gelenklager nach einem der Ansprüche 1 bis 4, dadurch gekennzeichnet, daß in die Gummischicht (11, 13) wenigstens ein Zwischenblech (12) einvulkanisiert ist.

6. Gelenklager nach einem der Ansprüche 1 bis 5, dadurch gekennzeichnet, daß der Längsschlitz (15) V-förmig ausgeführt ist und mit der Spitze der V-Form bis etwa an die Außenfläche des Innenrohrs (10) reicht.

7. Gelenklager nach einem der Ansprüche 1 bis 6, dadurch gekennzeichnet, daß das Außenrohr (14) an seiner Außenseite mit einem Gummifilm versehen ist.

8. Gelenklager nach einem der Ansprüche 1 bis 7, dadurch gekennzeichnet, daß die axiale Länge des Aufnahmeauges (7) etwa der axialen Länge der Gelenkbuchse (3) entspricht, daß die zweiten Lagerringe (19, 20) das Aufnahmeauge (7) stirnseitig mit einem Überstand überragen und mit diesem Überstand radial gegenüber den ersten Lagerringen (17, 18) liegen und daß die zweiten Lagerringe (19, 20) am Aufnahmeauge (7) in Axialrichtung so aufgepreßt sind, daß sie den jeweiligen Stirnbereich umfassen (Fig. 1).

9. Gelenklager nach einem der Ansprüche 1 bis 7, dadurch gekennzeichnet, daß die axiale Länge des Aufnahmeauges (7) länger als die Gelenkbuchse (3) ist, so daß die Stirnseitenbereiche des Aufnahmeauges (7) zumindest teilweise radial gegenüber den ersten Lagerringen (17, 18) liegen und daß die zweiten Lagerringe (23, 24) am Aufnahmeauge (7) in Axialrichtung so aufgepreßt sind, daß sie an den Stirnbereichen von innen her anliegen (Fig. 3).

10. Gelenklager nach einem der Ansprüche 1 bis 9, dadurch gekennzeichnet, daß ein erster und zweiter Lagerring (17, 18 und 19, 20 bzw. 23, 24) mit einer dazwischen einvulkanisierten Gummiwand (21, 22) vor der Montage des Gelenklagers (1) ein vorgefertigtes, zusammenhängendes Dichtungsbauteil (8, 9) bilden.

11. Gelenklager nach einem der Ansprüche 1 bis 10, dadurch gekennzeichnet, daß die ersten Lagerringe (17, 18) auf den Lagerbolzen (4) in Axialrichtung aufgepreßt sind.

12. Gelenklager nach einem der Ansprüche 1 bis 11, dadurch gekennzeichnet, daß die Dicke der Gummiwand (21, 22) im mittleren Bereich zwischen den Lagerringen dünner und zu den Lagerringen hin dicker ist.

13. Gelenklager nach einem der Ansprüche 1 bis 12, dadurch gekennzeichnet, daß mit dem Aufnahmeauge (7) ein Achslenker (2) verbunden ist.

**Revendications**

1. Palier à articulation (1), en particulier pour un guide d'essieu (2) d'un véhicule à moteur, comprenant:

une douille d'articulation cylindrique (3), composée d'un tube intérieur (10) et d'un tube extérieur (14) et, entre les deux, d'au moins une couche de caoutchouc (11, 13) fixée par vulcanisation, tandis que le tube extérieur présente au moins une fente longitudinale dont la profondeur s'étend loin à l'intérieur de la couche de caoutchouc, et

un oeillet de fixation (7) (première partie du palier) dans lequel la douille (3) est logée sous l'effet d'une précontrainte radiale, la douille de l'articulation, dont le diamètre est plus grand à l'état non chargé, étant insérée en force, par réduction régulière de ce diamètre, dans l'oeillet de fixation (7) dont le diamètre est inférieur, pendant que, ce faisant, la fente longitudinale, qui présente une certaine largeur lorsque la douille d'articulation n'est pas sollicitée, se ferme, de sorte que sous l'effet de la précontraintre dans la couche de caoutchouc, il se forme une liaison rigide entre l'oeillet de fixation (7) et le tube extérieur (14) de la douille d'articulation, caractérisé en ce que

le tube intérieur (10), par sa surface intérieure, est emboîté sur un axe cylindrique central (4) (seconde partie du palier), de manière à pouvoir glisser dessus,

sur les deux faces frontales de l'axe (4) sont disposées coaxialement des premières bagues (17, 18), qui sont fixées solidement et de manière étanche à l'axe (4), les bagues (17, 18) s'appuyant sur les faces frontales du tube intérieur (10) de la douille d'articulation (3) et maintenant le tube intérieur (10) en position axiale,

sur les deux faces frontales de l'oeillet de fixation (7) sont disposées des secondes bagues (19, 20; 23, 24), qui sont fixées solidement et de manière étanche à l'oeillet de fixation (7) et qui se trouvent, dans le sens radial, en regard des premières bagues (17, 18), et

une paroi en caoutchouc (21, 22) est fixée de manière étanche par vulcanisation entre les bagues respectives (17, 19; 18, 20 ou bien 17, 23; 18, 24).

2. Palier à articulation selon la revendication 1, caractérisé en ce que le tube intérieur (10) de la douille d'articulation (3) est fabriqué en matière plastique et le tube extérieur (14) est fabriqué en métal.

3. Palier à articulation selon la revendication 2, caractérisé en ce que le diamètre intérieur et l'épaisseur de matière du tube intérieur (10) sont choisis de manière à ce que le tube intérieur (10) soit emmanché en force sur l'axe cylindrique (4) sous l'effet de la déformation de la matière plastique.

4. Palier à articulation selon l'une quelconque des revendications 1 à 3, caractérisé en ce qu'il est prévu seulement une fente longitudinale (15) et le tube extérieur (14) est réalisé sous la forme d'une pièce en tôle roulée.

5. Palier à articulation selon l'une quelconque des revendications 1 à 4, caractérisé en ce qu'au moins une tôle intermédiaire (12) est fixée par vulcanisation dans la couche de caoutchouc (11, 13).

6. Palier à articulation selon l'une quelconque des revendications 1 à 5, caractérisé en ce que la fente longitudinale (15) a la forme d'un V et la pointe du V arrive à peu près jusqu'à la surface extérieure du tube intérieur (10).

7. Palier à articulation selon l'une quelconque des revendications 1 à 6, caractérisé en ce que le tube extérieur (14) est doté d'un film en caoutchouc sur sa face extérieure.

8. Palier à articulation selon l'une quelconque des revendications 1 à 7, caractérisé en ce que la longueur axiale de l'oeillet de fixation (7) correspond à peu près à la longueur axiale de la douille d'articulation (3), et en ce que les secondes bagues (19, 20) débordent de la face avant de l'oeillet de fixation (7) par une avancée et, par cette avancée, elles se situent radialement en face des premières bagues (17, 18), et en ce que les deuxièmes bagues (19, 20) sont emmanchées en force sur l'oeillet de fixation (7), dans le sens axial, de manière telle qu'elles entourent la zone frontale (figure 1).

9. Palier à articulation selon l'une quelconque des revendications 1 à 7, caractérisé en ce que la longueur axiale de l'oeillet de fixation (7) est plus grande que la douille d'articulation (3), de sorte que les zones frontales de l'oeillet de fixation (7) se situent, tout au moins en partie, radialement en face des premières bagues (17, 18), et en ce que les deuxièmes bagues (23, 24) sont emboîtées en force dans l'oeillet de fixation (7), dans le sens axial, de manière telle qu'elles reposent du côté intérieur sur les zones frontales (figure 3).

10. Palier à articulation selon l'une quelconque des revendications 1 à 9, caractérisé en ce qu'une première et une deuxième bague (17, 18 et 19, 20 ou 23, 24), avec une paroi en caoutchouc (21, 22) fixée par vulcanisation entre elles avant le montage du palier à articulation (1), forment un élément d'étanchéité préfabriqué (8, 9) qui est d'un seul tenant.

11. Palier à articulation selon l'une quelconque des revendications 1 à 10, caractérisé en ce que les premières bagues (17, 18) sont emmanchées en force sur l'axe (4), dans le sens axial.

12. Palier à articulation selon l'une quelconque des revendications 1 à 11, caractérisé en ce que l'épaisseur de la paroi en caoutchouc (21, 22) est plus mince dans la zone intermédiaire entre les bagues et plus épaisse vers les bagues.

13. Palier à articulation selon l'une quelconque des revendications 1 à 12, caractérisé en ce qu'un guide d'essieu (2) est relié à l'oeillet de fixation (7).

**Claims**

1. Joint bearing (1), in particular for an axle link (2) of a motor vehicle, having a cylindrical joint bush (3), consisting of an inside tube (10) and an outside tube (14) and at least one layer of rubber (11, 13) vulcanized adherently in between said tubes, the outside tube having at least one longitudinal slot which extends with its slot depth deep into the layer of rubber and having a retainer lug (7) (first bearing part), into which the joint bush (3) is introduced under radial prestress, the joint bush with its larger diameter in the unstressed state being pressed under even reduction of this diameter into the retainer lug (7) with a smaller diameter, and the longitudinal slot, constructed to have a corresponding slot width in the unstressed state of the joint bush, thereby having closed, by which means a fixed connection is produced between the retainer lug (7) and the outside tube (14) of the joint bush due to the prestress in the layer of rubber, characterized in that the inside tube (10) is fitted with its inside surface in a sliding manner onto a central cylindrical bearing bolt (4) (second bearing part), in that first bearing rings (17, 18) are mounted coaxially at each end face of the bearing bolt (4) and are connected fixedly and tightly to the bearing bolt (4), the bearing rings (17, 18) resting on the end faces of the inside tube (10) of the joint bush (3) and holding the inside tube (10) in the axial direction, in that second bearing rings (19, 20; 23, 24) are mounted at each end face of the retainer lug (7), which bearing rings are connected fixedly and tightly to the retainer lug (7) and which are located opposite the first bearing rings (17, 18) in the radial direction, in that a rubber wall (21, 22) is vulcanized tightly in between each of the respective bearing rings (17, 19; 18, 20 and 17, 23; 18, 24).

2. Joint bearing according to Claim 1, characterized in that the inside tube (10) of the joint bush (3) is made of plastic and the outside tube (14) of metal.

3. Joint bearing according to Claim 2, characterized in that the inside diameter and the thickness of material of the inside tube (10) armrial of the inside tube (10) are selected such that the inside tube (10) is pressed onto the cylindrical bearing bolt (4) with deformation of the plastic material.

4. Joint bearing according to one of Claims 1 to 3, characterized in that only one longitudinal slot (15) is provided and the outside tube (14) is constructed as a rolled sheet part.

5. Joint bearing according to one of Claims 1 to 4, characterized in that at least one intermediate sheet (12) is vulcanized into the layer of rubber (11, 13).

6. Joint bearing according to one of Claims 1 to 5, characterized in that the longitudinal slot (15) is of V-shaped construction and extends with the tip of the V-shape approximately up to the outside surface of the inside tube (10).

7. Joint bearing according to one of Claims 1 to 6, characterized in that the outside tube (14) is provided on its outside with a rubber film.

8. Joint bearing according to one of Claims 1 to 7, characterized in that the axial length of the retainer lug (7) corresponds approximately to the axial length of the joint bush (3), in that the second bearing rings (19, 20) protrude at the end face with a projecting length over the retainer lug (7) and are located with this projecting length radially opposite the first bearing rings (17, 18), and in that the second bearing rings (19, 20) are pressed on at the retainer lug (7) in the axial direction in such a way that they enclose the respective end region (Fig. 1).

9. Joint bearing according to one of Claims 1 to 7, characterized in that the axial length of the retainer lug (7) is longer than the joint bush (3), so that the end face regions of the retainer lug (7) are located at least partially radially opposite the first bearing rings (17, 18), and in that the second bearing rings (23, 24) are pressed on at the retainer lug (7) in the axial direction in such a way that they rest from the inside on the end regions (Fig. 3).

10. Joint bearing according to one of Claims 1 to 9, characterized in that a first and second bearing ring (17, 18 and 19, 20 and 23, 24) with a rubber wall (21, 22) vulcanized in between form a prefabricated, combined sealing component (8, 9) prior to assembly of the joint bearing (1).

11. Joint bearing according to one of Claims 1 to 10, characterized in that the first bearing rings (17, 18) are pressed onto the bearing bolt (4) in the axial direction. 12. Joint bearing according to one of Claims 1 to 11, characterized in that the thickness of the rubber wall (21, 22) is thinner in the central region between the bearing rings and thicker towards the bearing rings.

13. Joint bearing according to one of Claims 1 to 12, characterized in that an axle link (2) is connected to the retainer lug (7).

_FIG.1_

FIG. 2

_FIG. 3_